# EUROPÄISCHE PATENTANMELDUNG

(11) **EP 1 238 784 A1**
(43) Veröffentlichungstag der Anmeldung: **11.09.2002**
(21) Anmeldenummer: 01810222.8
(22) Anmeldetag: 05.03.2001
(51) Int. Cl.: B29C 70/44, A45C 13/10

(54) **Profilierter schalenartiger Gegenstand, dessen Herstellung und eine dazu verwendbare Form**

(71) Anmelder: Swiss Luggage SL AG, 3018 Bern (CH)
(72) Erfinder: Gygax, Rudolf, 3084 Wabern (CH); Mischler, Jürg, 3084 Wabern (CH); Musch, Gerhard, 88090 Immenstaad (DE)
(74) Vertreter: Roshardt, Werner Alfred, Dipl.-Phys.

(57) **Zusammenfassung**

Bei der Herstellung eines profilierten Gegenstands **(1)**, insbesondere eines Behälterteils, mit einer schalenartigen Gegenstandswand **(3)**, wobei das Wandmaterial wenigstens ein mit wenigstens einem aushärtbaren Tränkmaterial getränktes, gewebeartiges Schichtmaterial hat, wird zur Formgebung ein Positiv- und ein Negativformteil **(7a, 7b)** verwendet. Zwischen beiden Formteilen liegt das Wandmaterial des Gegenstands **(1)**. Auf beide Formteile **(7a, 7b)** wird ein Druckverlauf aufgebracht und zum Aushärten wird wenigstens einer der Formteile **(7b)** mit einem Temperaturverlauf beaufschlagt. Zum Entnehmen des wenigstens teilweise ausgehärteten Gegenstands **(1)** wird wenigstens einer der Formteile **(7a)**, in dem er bereichsweise elastisch verformt wird, abgezogen.

Diese Herstellung stellt ein preisgünstiges Verfahren dar, mit dem profilierte Gegenstände, welche mit einem aushärtbaren Tränkmittel getränktes Schichtmaterial haben, mit einer blasen- und "faltenfreie" Gegenstandswand insbesondere ohne Autoklaven herstellbar sind. Das Verfahren wird zudem noch preislich vergünstigt, indem vorzugsweise für kompliziert gestaltete oder besondere Funktionen aufweisende Oberflächenbereiche in die noch nicht ausgehärtete Wand vorgefertigte Zusatzelemente eingesetzt werden.

Vorzugsweise hat wenigstens eines der Schichtmaterialien **(47)** thermoplastische und wenigstens ein anderes Schichtmaterial **(37, 43, 45, 49)** duroplastische Eigenschaften nach dem Aushärtevorgang. Hierdurch weisen die derart hergestellten Gegenstandswände eine hohe mechanische Bruchstabilität auf.

## Beschreibung

### Technisches Gebiet

Die Erfindung betrifft ein Verfahren zur Herstellung eines profilierten, schalenartigen Gegenstands gemäß dem Oberbegriff des Patentanspruchs 1, eine Form mit einem Positiv- und einem Negativformteil zur Herstellung dieses Gegenstands gemäß dem Oberbegriff des Patentanspruchs 6, ein in die Gegenstandswand dieses Gegenstands integrierbares Zusatzelement gemäß dem Oberbegriff des Patentanspruchs 11 und einen mit dem Verfahren hergestellten Gegenstand gemäß dem Oberbegriff des Patentanspruchs 12.

### Stand der Technik

In der EP 0 914 784 ist ein Behälter, insbesondere ein Reisekoffer und dessen Herstellungsverfahren beschrieben. Die Behälterwand war hier drei- bzw. vierlagig aufgebaut. Bei einem vieriagigen Aufbau folgten drei mit Harz getränkte Polyestergewebe auf ein Carbongewebe. Auch konnte zwischen den beiden Polyestergeweben ein Schaumstoffkern eingelegt werden. Auf das Carbongewebe konnten auch vier mit Harz getränkte Polyestergewebe folgen. Wenigstens eines der Polyestergewebe war durch ein hochdrapiertes Glasgewebe ersetzbar.

Bei der Herstellung des mehrlagigen Aufbaus der bekannten Behälterwand wurde darauf geachtet, dass das Gewebe nicht erst in eine Form eingelegt und dann anschließend mit Harz bestrichen wurde. Es hatte sich nämlich gezeigt, dass bei dieser Herstellungsart unschöne kleine, jedoch sichtbare Blasen im ausgehärteten Carbongewebe verblieben. Diese Bläschen konnten vermieden werden, wenn in die Form jeweils vorher mit dem betreffenden Harz getränkte Gewebe eingelegt wurden.

Bevorzugt mehrere derart hergestellte profilierte Behälterteile wurden dann noch in ihren Formen liegend in einen mit einem Temperatur- und Druckverlauf beaufschlagbaren Autoklaven zum Aushärten gebracht.

Das dort beschriebene Herstellungsverfahren war aufwendig und durch die Verwendung eines Autoklaven auch teuer. Auch konnten bei noch so sorgfälltigen Arbeiten Blasen und kleine Falten bzw. Unebenheiten in der Behälterwand nicht vermieden werden.

### Darstellung der Erfindung

### Aufgabe der Erfindung

Aufgabe der Erfindung ist es, ein preisgünstiges Verfahren aufzuzeigen, mit dem profilierte Gegenstände, welche mit einem aushärtbaren Tränkmittel getränktes Schichtmaterial haben, mit einer blasen- und "faltenfreien" Gegenstandswand insbesondere ohne Autoklaven herstellbar sind, wobei vorzugsweise die derart hergestellten Wände eine hohe mechanische Bruchstabilität vorzugsweise unter Vermeidung eines sogenannten Splitterbruches aufweisen.

### Lösung der Aufgabe

Die Aufgabe wird verfahrensmäßig dadurch gelöst, dass nicht wie in der EP-A 0 914 784 nur getränkte Schichtmaterialien zur Formgebung in einen Formteil gelegt werden, sondern dass eine zweiteilige Form bestehend aus besonders gestalteten Positiv- und einem Negativformteilen verwendet wird. Das getränkte Wandmaterial wird zwischen einen Positiv- und einen Negativformteil eingebracht, welche u.a. als Presse wirken. Wenigstens einer der beide Formteile wird mit einem Druck- und einem Temperaturverlauf beaufschlagt. Hierdurch ist ein raum- und preisaufwendiger Autoklav eliminierbar. Um ein leichtes Ausformen des wenigstens teilweise ausgehärteten Gegenstands, d. h. dessen Wand, zu erreichen, ist einer der Formteile, vorzugsweise der Positivformteil, bereichsweise elastisch verformbar ausgebildet.

Die Ausgestaltung eines Formteiles mit bereichsweise elastischen Wänden verbindet die Vorteile einer einteiligen Negativ- und einer einteiligen Positivform mit denjenigen einer aus mehreren Teilen zusammengesetzten und auseinander bewegbaren Form; d. h. einer leichten Entformbarkeit. Ein weiterer, insbesondere preislicher Vorteil ergibt sich daraus, dass das Ensemble aus Positiv- und Negativformteil selbst als "Mini-Autoklav" verwendbar ist. Ein derartiger Aufbau ermöglicht eine große Gestaltungsvielfalt bei der Druck- und Temperaturbeaufschlagung. Zudem ist hier die Wärmekapazität und die Wärmeübergangszeit gegenüber einem Einbringen einer massiven Form in einen Autoklaven bedeutend geringer. Auch entfallen Transportwege vom Formbeschickungsarbeitsplatz zum Standort des in der Regel voluminösen Autoklaven.

Als Wandmaterial des Gegenstands kann nun lediglich ein einziges mit einem aushärtbaren Tränkmaterial getränktes Schichtmaterial verwendet werden; in der Regel wird man jedoch mehrere verwenden. Wenigstens ein Schichtmaterial wird man als Gewebe wegen der leichten Verformbarkeit und der hohen Stabilität, insbesondere wegen seiner Längsstabiltät verwenden. Als besonders vorteilhaft hat es sich erwiesen, wenn Schichtmaterialien mit thermoplastischen und duroplastischen Eigenschaften zusammen verwendet werden. Es können dann nämlich die Vorteile dieser beiden Materialgruppen mit einer Unterdrückung deren Einzelnachteile miteinander vereinigt werden.

Duroplastische Materialien haben nämlich eine bedeutend höhere mechanische Formstabilität als thermoplastische; auch ist deren Fließneigung geringer. Werden Duroplaste nämlich über ihre Stabilitätsgrenze beansprucht, brechen sie unter Splitterwirkung. Ein Duroplast beispielsweise als Kofferschale würde zwar eine hohe mechanische Steifigkeit und damit Stabilität ergeben; er würde jedoch bei einer Überbeanspruchung splitternd brechen. Die Bruchstücke mit ihren scharfen Kanten wären aus Sicherheitsgründen jedoch nicht tolerierbar. Ein thermoplastisches Material läßt sich hingegen bedeutend stärker verformen als ein duroplastisches Material, zeigt aber nicht dessen hohe mechanische Steifigkeit. Mit dem hier aufgezeigten Schichtenaufbau erreicht man bei der Schale eine Verhinderung eines Splitterbruches. Ein Bruch ist zwar bei extremen Beanspruchungen möglich, die Bruchstücke haften jedoch immer noch zusammen. Die Lagen des Schichtenaufbaus lösen sich hierbei nicht von einander ab; es gibt keine scharfen Kanten.

"Verheiratet" man nun beide Materialien in einem sandwichartigen Aufbau miteinander, so wird die Spittemeigung durch das thermoplastische Material stark reduziert und die geringe Steifigkeit des thermoplastischen Material durch das duroplastische Material behoben.

Bisher wurden mit Tränkmaterialien getränkte Gewebe in oder auf eine Form gelegt, dann Wärme behandelt und anschließend die Ränder des derart gebildeten Gegenstands sauber geschnitten und/oder gefräst. Es wird nun hier ein anderer, Arbeitszeit reduzierender Weg beschritten. Das Schichtmaterial, welches bis in die später freien Randkantenbereiche des Gegenstand hineinreichen soll, wird bereits vor dem Einbringen in die Form in seinen Abmessungen entsprechend konfektioniert und sofern notwendig, auch bereits vorgeformt. Dieses bereits vorbehandelte Material (z.B. Gewebe), welches auch getränkt sein kann, wird dann derart eingelegt, dass seine Ränder auf einem Anstehabsatz eines der Formteile (Positiv- oder Negativformteil) aufstehen. Eine Nachbearbeitung nach dem Ausformen ist dann nicht mehr notwendig. Da getränktes Gewebe, insbesondere mit den nachfolgenden Verfahrensschritten, in Längsrichtung problemlos gestaucht und gezogen werden kann, kann die Konfektionierung mit einer großen Toleranz erfolgen.

In einer Ausführungsvariante werden in eine Gegenstandswand Zusatzelemente integriert . Handelt es sich beispielsweise um eine Kofferschale so sind diese Zusatzelemente in die Gegenstandswand integrierbare Befestigungselemente für Schlösser, Eckenverstärkungen, Namensschildtaschen etc. Ist der Gegenstand z. B. eine Verschalung so könnten auch hier als Zusatzelemente Schamierbefestigungen, Verstärkungen, Handgriffe, usw. vorgesehen werden. Zur Integration derartiger Zusatzelemente hat einer der Formteile, bevorzugt der Positivformteil für jedes Zusatzelement eine Positionierhilfe, in die bzw. auf die das betreffende Zusatzelement zur Ortspositionierung legbar ist. Es werden jedoch erst alle Schichtmaterialen auf den Formteil aufgelegt und dann erst jedes Zusatzelement in bzw. auf die betreffende Positionierhilfe gelegt. Das Zusatzelement wird sozusagen "ein- bzw. aufgeklebt". Die Form mit den beiden Formteilen wird erst nach dem Einbringen des bzw. der Zusatzelemente geschlossen und dann mit einem Druck- und Temperaturverlauf beaufschlagt.

Zur beispielsweisen Herstellung einer Kofferschale wird auf den Positivformteil ein Glasgewebe aufgelegt, welches mit einem nach dem Aushärten duroplastische Eigenschaften aufweisenden Tränkmittel getränkt ist. Anschließend wird eine vakuumdichte Haube aufgelegt und evakuiert. Hierdurch wird ein blasenfreier Zustand der späteren Gegenstandswand erreicht. Durch dieses Absaugen erfolgt gleichzeitig ein faltenfreies Anliegen des Schichtmaterials an der Oberfläche der Positivform.

In einem nächsten Verfahrensschritt wird die Form unter Entfernen der Haube geöffnet und als nächste Schicht eine Schaummatte als Gegenstandswandkernstoff wirkend aufgelegt. Die Schaummatte ist vorzugsweise geschlossenporig ausgebildet. Sie ist ein preisgünstiges und auch leichtes Material zur Verdickung der Gegenstandswand. Durch die nach den Aushärten stabile Glasgewebeschicht und die nachfolgend beschriebenen auf der Schaummatte aufliegenden stabilen Schichten, ergibt sich ein äusserst stabiler und verwindungssteifer schalenartiger Aufbau. Auch nach dem Auflegen der Schaummatte wird evakuiert.

Auf die Schaummatte wird dann ein mit einem nach dem Aushärten duroplastartigen wirkenden Tränkmittel getränkte Kohlefasergewebe (Carbongewebe) aufgelegt. Anschließend wird wieder evakuiert.

Auf das Kohlefasergewebe wird vorzugsweise eine Thermoplastfolie aufgelegt. Diese Thermoplastfolie ergibt einmal eine hohe Kratzfestigkeit; andererseits fügt zu den guten duroplastischen Eigenschaften des Schichtenaufbaues die guten thermoplastischen Eigenschaften hinzu. Auch jetzt wird wieder evakuiert.

Mit dieser Thermoplastfolie kann ein beispielsweiser Aufbau einer Gegenstandswand bereits beendet sein und mit der nachfolgenden, unten beschriebenen Druck- und Temperaturverlaufsbeaufschlagung begonnen werden. Soll die Gegenstandswand jedoch farbig lackierbar sein, wird als weitere Schicht ein Vlies aufgebracht. Dieses Vlies ist mit einem Tränkmittel getränkt, welches nach dem Aushärten duroplastische Eigenschaften hat.

Damit jeweils eine Evakuierung der auf- bzw. eingelegten Schichten möglich ist, hat der Positivformteil eine umlaufende Dichtlippe mit nach innen versetzter Nut als Luftkanal, der mit einem Vakuumanschluss verbindbar ist.

Eine der beiden Formteile ist zudem innen mit einem Hohlraum versehen, in den ein Heiz- und/oder Kühlfluid einbringbar ist.

Wie bereits oben ausgeführt, ist einer der Formteile zum leichteren Ausformen bereichsweise elastisch verformbar ausgebildet. Diese sich bereichsweise ändernde Elastizität bzw. sich ändernde Steifigkeit der Formteilwand wird durch ein elastisches Formwandmaterial erreicht, in das Versteifungsteile eingelegt sind. Vorzugsweise wird man den Positivformteil versteifen, indem beispielsweise in die gerade oder nahezu geraden bzw. großflächigen Formwandteilbereiche Versteifungen eingelegt werden und die restlichen Bereiche insbesondere die Eckenbereiche unversteift bedingt elastisch blieben. Da der Formteil eine elastische Wand aufweist, erfolgt eine ausreichend gute Druckübertragung bei einer Druckbeaufschlagung.

Der in seinem Grundmaterial elastisch ausgebildete Formteil kann dann auf seiner Aussenseite (die Seite, auf der der Schichtenaufbau nicht liegt) mit einem Druckverlauf beaufschlagt werden. Die Druckbeaufschlagung wird vorteilhaft mit einem unter Druck stehenden Fluid vorgenommen.

Der an der zukünftigen Oberfläche des Gegenstands anliegende bzw. diesen formende Oberflächenbereich des Formteils beispielsweise des Negativformteils weist eine hohe Oberflächengüte auf und ist insbesondere aus Galvanonickel gefertigt. Selbstverständlich kann auch der ganze Formteil aus Galvanonickel bestehen. Auch kann die Form aus einem mit Duroplast getränkten Kohlefasergewebe bestehen. Ferner kann sie aus Metall, insbesondere Aluminium, hergestellt sein.

Um ein Festkleben der Gegenstandswände an der Oberfläche der Formteile zu vermeiden, ist auf diesen eine Selbstrennfolie aufgebracht, vorzugsweise aufvulkanisiert. Die Selbsttrennfolie ist in vorteilhafter Weise auf dem "elastischen" Positivformteil angeordnet.

### Kurze Beschreibung der Zeichnungen

Im Folgenden werden Beispiele des erfindungsgemäßen Verfahrens, der hierzu verwendbaren erfindungsgemäßen Form, eines Zusatzelementes sowie des mit dem Verfahren und der Form hergestellten erfindungsgemäßen Gegenstands anhand der nachfolgenden Zeichnungen näher erläutert. Weitere Vorteile der Erfindung ergeben sich aus dem Beschreibungstext. Es zeigen:
- Fig. 1: eine schematische Querschnittdarstellung eines Positivformteils der erfindungsgemäßen Form,
- Fig. 2: eine schematische Explosions-Querschnittdarstellung einer temperatur- und druckbeaufschlagbaren Form mit einem Negativ- und einem Positivformteil, der mit Schichtmaterial belegt ist,
- Fig. 3: eine in den **Figuren 1** und **2** dargestellten Positvformteil mit einem erfindungsgemäßen, in Explosionsdarstellung gezeigten Schichtenaufbau,
- Fig. 4: einen Querschnitt durch den Positivformteil mit einem aufgelegten Teilschichtenaufbau einer Gegenstandswand mit aufgelegter Haube zur Schichtenevakuierung,
- Fig. 5: einen Querschnitt durch eine Detailvergrößerung des Übergangs vom Randbereich eines Zusatzelements zum Schichtenaufbau der Gegenstandswand und
- Fig. 6: einem Querschnitt analog zu **Figur 2,** wobei jedoch hier Details der Druckplatte ausgeführt sind und die Positivform bereits in die Negativform eingelegt dargestellt ist.

### Wege zur Ausführung der Erfindung

Beim unten beschriebenen, erfindungsgemäßen Verfahren zur Herstellung eines profilierten Gegenstands **1** mit einer schalenartigen Gegenstandswand **3** wird eine Form **5** mit einem Positiv- und einem Negativformteil **7a** und **7b** verwendet.

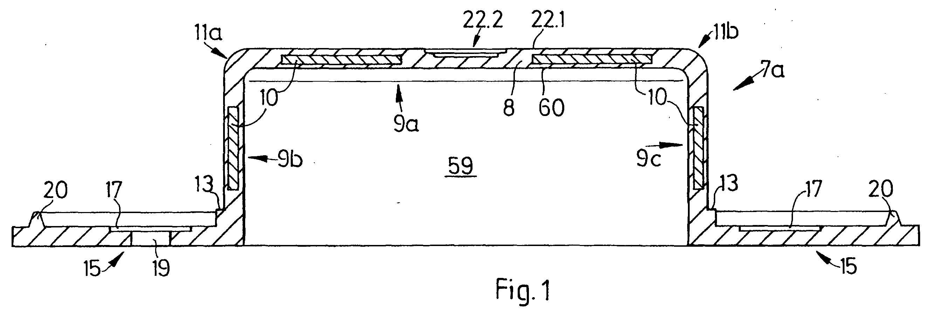

Der Positivformteil **7a,** wie er in den **Figuren 1, 2** und **4** im Querschnitt schematisch dargestellt ist, ist entsprechend der Innenform des herzustellenden Gegenstands **1** geformt. Der herzustellende Gegenstand **1** kann beispielsweise eine Kofferschale (Boden- oder Deckelteil), ein Handgriff, eine Abdeckung z. B. verwendbar in Fahrzeugen usw. sein. Der Positivformteil **7a** ist aus einem bedingt eigensteifen, jedoch auch in vorgegebenen Bereichen elastischem Material hergestellt. Die Steifigkeit und Elastizität der Positivform ist örtlich veränderlich derart gewählt, dass das unten beschriebene Auflegen der verschiedenen Schichtmaterialien unter Beibehaltung einer vorgegebenen Form möglich ist und nach dem Aushärten der Positivformteil **7a** jedoch derart verformbar ist, dass sie vom hergestellten und ausgehärteten Gegenstand **1** entfernbar d.h. abziehbar ist.

Um diese Eigenschaften zu erreichen, besteht der Positivformteil **7a** beispielsweise aus Kautschuk (vorzugsweise aus Polyacrylnitrilkautschuk) als elastisches Grundmaterial **8.** In die geraden Formteilbereiche **9a** bis **9c** sind Versteifungselemente **10** eingelegt, d. h. integriert, während die Ecken **11a** und **11b** des Positivformteils **7a** unversteift gehalten sind. Die Versteifungselemente **10** können Metallplatten oder steife Kunststoffplatten wie Kohlefasergewebe durchtränkt mit ausgehärteten Duroplast sein. Der Positivformteil **7a** hat ferner einen umlaufenden Anstehabsatz **13** der als "Anschlag", wie unten beschrieben, für einzulegendes Wandschichtmaterial dient. Dieser Anstehabsatz **13** ermöglich eine Herstellung von profilierten schalenartigen Gegenständen, deren Kanten ohne Bearbeitung eine ausgezeichnete Maßhaltigkeit und gutes Aussehen (beispielsweise keine Ausfransungen, keine scharfen Spitzen ...) haben.

Der Positivformteil **7a** hat einen umlaufenden ebenen Abstellflansch **15.** Der Abstellflansch **15** dient, wie schon der Ausdruck sagt, als Abstellfläche für den Positivformteil **7a** während des Auflegens des Schichtmaterials und Einsetzen von Zusatzelementen **22.3.** Er hat auf seiner der Abstellfläche gegenüber liegenden Seite eine umlaufende Nut **17**, welche bei einem Zusammenbau mit dem Negativformteil **7b** bzw. einer elastischen Haube **42** als Luftkanal bei einem Evakuierungsprozess dient. In diese Nut **17** mündet ein Durchbruch **19** für einen Vakuumanschluss. Im freien Randbereich des Abstellflansches ist benachbart zur Nut **17** nach aussen versetzt, eine umlaufende Dichtlippe **20** angeformt.

Der Positivformteil **7a** hat ferner in seiner Aussenwandung **22.1** eine Ausnehmung **22.2** als Positionierhilfe in die hier beispielsweise ein Zusatzelement **22.3,** wie unten beschrieben, einlegbar ist.

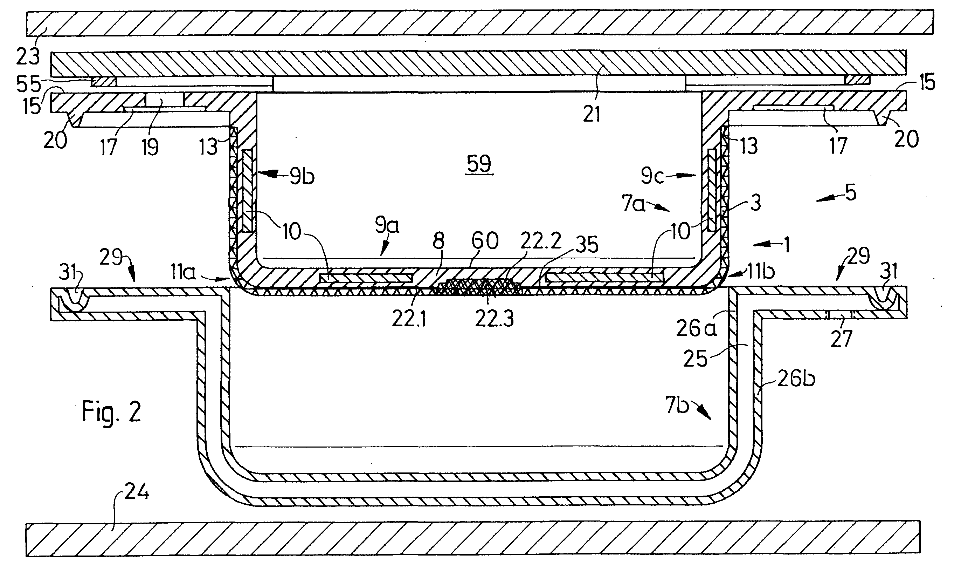

Der Negativformteil **7b** ist in **Figur 2** zusammen mit dem Positivformteil **7a** dargestellt. **Figur 2** ist eine schemtische Explosions-Querschnittdarstellung, wobei hier die Form **5** temperatur- und druckbeaufschlagbar ist. Die Form **5** hat ferner eine Druckplatte **21,** auf die eine Oberplatte **23** einer nicht dargestellten Presse gegen eine Unterplatte **24** dieser Presse wirkt. Der Negativformteil **7b** ist im Gegensatz zum Positivformteil **7a** starr und nicht elastisch verformbar ausgebildet. Er weist einen Innenraum **25** auf, der von einer Innen- und einer Aussenwand **26a** und **26b** umgeben ist. Der Innenraum **25** ist für ein einbringbares Kühl- bzw. Aufheizfluid durch einen Durchbruch **27** in der Aussenwand **26b** zugänglich. Die Innen- und Aussenwand **26a** und **26b** können entgegen der schematischen Darstellung in **Figur 2** mit stabilisierenden (nicht dargestellten) Querstegen einander abstützend verbunden sein. Der Negativformteil **7b** stellt eine passende Negativform zum Positivformteil **7a** dar; er hat jedoch kein zum Anstehabsatz **13** analog angeformtes Element. Er hat jedoch einen zum Abstellflansch **15** passenden Flansch **29,** der eine zur Dichtlippe **20** passende umlaufende Dichtnut **31** in der Innenwand **26a** aufweist. Ein Ineinanderstecken von Positivformteil **7a** in den Negativformteil **7b** ist bei auf dem Positivformteil **7a** aufgelegten, noch nicht ausgehärteten Gegenstandsmaterial mit einer Spielpassung möglich.

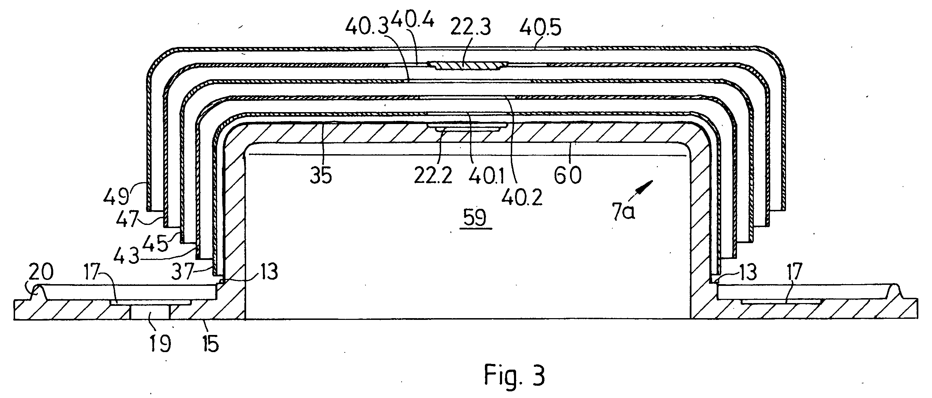

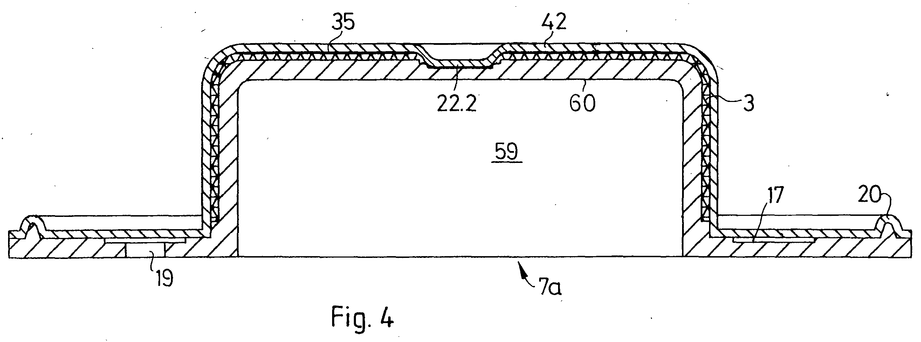

Eine beispielsweise Herstellung eines Schichtenaufbaus der Gegenstandswand **3** des profilierten schalenartigen Gegenstands **1** wird anhand der beiden Figuren **3** und **4** erläutert. Um ein Ankleben des Schichtenmatrials an der Oberfläche des Positivformteils **7a** zu vermeiden, ist auf diese eine Selbsttrennfolie **35** aufgebraucht, vorzugsweise aufvulkanisiert (andere Verfahren zum Aufbringen einer derartigen Folie bzw. Schicht sind möglich, wie beispielsweise lackieren oder nur ankleben). Auf diese Selbsttrennfolie **35** wird nun ein in seinen Abmessungen konfektioniertes Glasgewebe **37** aufgelegt. Das Glasgewebe **37** ist mit einem Tränkmittel getränkt, welches im ausgehärteten Zustand ein Duroplast ist. Vorzugsweise wird man als Tränkmittel Expoxydharz nehmen; andere Flüssigkeiten bzw. pastöse Tränkmittel sind möglich. Das Glasgewebe **37** ist derart konfektioniert, dass es in seinen Abmessungen passend auf den Positivteil **7a** derart auflegbar ist, dass sein Aussenrand **37** auf dem Anstehabsatz **13** ansteht. Sofern Zusatzelemente **22.3** verwendet werden sollen, hat das Glasgewebe **37** gemäß deren Anzahl und Lage entsprechend positionierte Löcher, wobei der Lochrand mit dem Rand der betreffenden Ausnehmung **22.2** übereinstimmt; der Einfachheit halber ist nur eine einzige Ausnehmung **22.2** und ein Loch **40.1** bis **40.5** in den Schichtmaterialien **37, 43, 45, 47** und **49** für nur ein einziges Zusatzelement **22.3** dargestellt. Es können aber beliebig viele Zusatzelemente **22.3** bzw. Löcher an beliebigen Stellen vorhanden sein.

Anstelle des Glasgewebes **37** kann auch ein Polyestergewebe oder ein Kohlefasergewebe mit Tränkmittel verwendet werden. Die Kohlefaser ist leicht; bringt zwar eine hohe Steifigkeit mit einer hohen Formstabilität, ist aber teuer. Ein Glasfasergewebe ist billig aber schwer. Ein Polyestergewebe ist billig und leicht, aber nicht so steif wie die anderen Gewebe.

Ist das mit dem Tränkmittel versehene und entsprechend den Gegenstandsabmessungen zugeschnittene Glasgewebe **37** (beispielsweise eine sogenanntes Glasfaser-Prepreg mit duromerer Matrix) auf den Positivformteil **7a** aufgelegt, wird es mit einer elastischen Haube **42** bedeckt, welche dichtend über die Dichtlippe **20** greift. Die Haube **42** soll sich gut anschmiegen können, jedoch nicht festkleben. Als Haubenmaterial sind Elastomere verwendbar. Gute Erfahrungen sind mit Silikonmaterial erreicht worden. Der exakte Zuschnitt des Glasgewebes **37** kann beispielsweise mit einer CNC-gesteuerten Zuschnitteinrichtung erfolgen. Über den Vakuumanschluss **19** wird nun auf einen Unterdruck von mindestens auf 0,8 bar, vorzugsweise jedoch auf 0,1 bar abgepumpt. Hierdurch werden im Glasgewebe **37** enthaltene und beim Auflegen eingebrachte Gase insbesondere Luft abgesaugt und eine gute, satte Auflage erreicht. Auch werden auf der Selbsttrennfolie **35** vorhandene Luftbläschen abgesaugt. Das Glasgewebe **37** liegt nun blasen- und faltenfrei auf der Positivformteil **7a** auf.

In einem nächsten Verfahrensschritt wird als Gegenstandswandkemstoff eine PVC-Schaummatte **43** aufgelegt, welche analog zum Glasgewebe **37** konfektioniert und vorgeformt ist. D. h. die Schaummatte **43** hat eine dreidimensionale Form entsprechend dem Gegenstandsprofil. Anschließend erfolgt das bereits für das Glasgewebe beschriebene Evakuieren unter Verwendung der elastischen Haube **42.** Die PVC-Schaummatte **43** ist bevorzugt geschlossenporig ausgebildet. Hierdurch wird vermieden, dass Feuchtigkeit oder Gase bzw. Flüssigkeiten aus der Umgebung langfristig eindiffundieren könnten.

Auf die "evakuierte" PVC-Schaummatte **43** wird nachfolgend ein ebenfalls kovektioniertes mit einem "duroplastischen" Tränkmittel getränktes Kohlefasergewebe **45** aufgelegt, welches dann ebenfalls "evakuiert" wird. Eine dreidimensionale Formgebung vor dem Auflegen ist nicht notwendig. Als "duroplastisches" Tränkmittel wird man bevorzugt Epoxydharz verwenden.

Auf das Kohlefasergewebe **45** kommt eine thermoplastische Folie **47,** welche ebenfalls auf Endmass konvektioniert und entsprechend dem Profil des Positivformteils **7a** tiefgezogen ist. Auch hier wird zur Vermeidung von eingeschlossenen Bläschen und Falten, wie bereits oben beschrieben, unter Verwendung der Haube **42,** evakuiert. Durch eine Integration dieser thermoplastische Folie **47** in einem Schichtenaufbau der Gegenstandswand **3** mit nach dem Aushärten duroplastischen Materialien, hier des Tränkmittels des Glasfasergewebes **37,** ergibt sich eine Vereinigung der duroplastischen und der thermoplastischen Materialvorteile. Die hohe Formstabilität des Duroplastes bleibt erhalten, seine Splitterneigung hingegen wird durch die thermoplastische Folie **47** eliminiert. Ein weiterer Vorteil der thermoplastischen Folie **47** ist, sofern sie die oberste Aussenschicht bildet, dass ein Verkratzen stark reduziert wird und sofern es dennoch einmal zu einem Kratzer kommt, erscheint dieser nicht mehr als heller Strich; mit der Folie **47** hebt er sich nicht mehr vom Erscheinungsbild des Gewebes **45** ab. Dieses Verhalten ergibt bei einem als Kofferschale (Boden- und/oder Deckelteil) ausgebildeten Gegenstand einen großen ästhetischen Vorteil; der Koffer sieht immer wie neu aus.

Sollen Gegenstandswände hergestellt werden, bei denen das dekorative Erscheinungsbilde des Kohlefasergewebes sichtbar bleiben soll, wird auf die unten beschriebenen weitere Schicht verzichtet.

Wird jedoch eine Lackier- oder Beschriftbarkeit gewünscht, so wird in einer besonderen Ausführungsform eine weitere vließartige Aussenschicht **49** hinzugefügt. Diese Schicht **49** ist ebenfalls mit einem duroplastartigen Tränkmittel getränkt. Sie sollte zudem bei durch Strahlungseinfall erreichbaren Temperaturen von 90°C bis 110°C nicht erweichen und auf keinem Fall klebrig werden. Als Schichtmaterial würde man vorzugsweise die Dexter SynSkin HC 9837.1 der Firma Dexter Corp. verwenden. Diese Schicht widersteht (="Gel time") Temperaturen von 121 °C zwanzig bis fünfundreissig Minuten und 177°C 0,5 bis 2 Minuten. Es ist nämlich davon auszugehen, dass eine dunkle Oberfläche bei Sonnenbestrahlung 95 bis 110°C erreichen kann. Um die Haftfähigkeit eines Lackes zu erhöhen, kann die Oberfläche der Aussenschicht **49** mit einem "einhundertfünfziger" Sandstrahl leicht aufgerauht werden. Das abgeriebene Material wird dann mit einem sog. "Static Conditioner" entfernt.

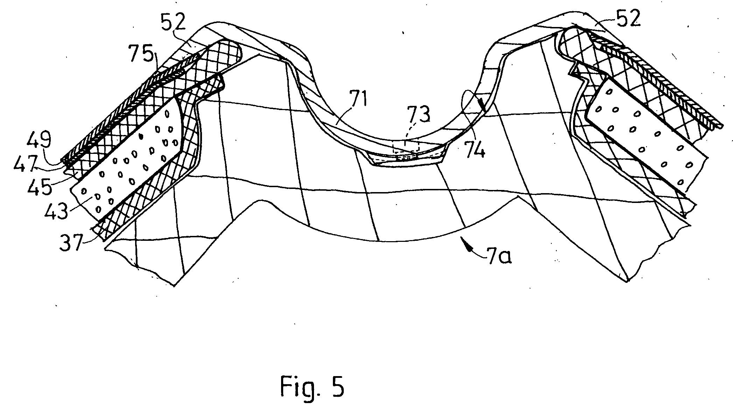

Nachdem sämtliche Schichten des Schichtaufbaus der Gegenstandswand **3** aufeinandergelegt und "evakuiert" sind, wird je nach der Anzahl vorhandenen Ausnehmungen **22.2** ein oder mehrere Zusatzelemente **22.3** in die betreffende Ausnehmung **22.2** eingelegt. Jedes Zusatzelement **22.3** hat eine Randverjüngung **52,** welche kontinuierlich vom dicken zum dünnen Bereich ausgebildet sein kann, wie in **Figur 5** dargestellt ist. Es kann aber auch ein stufenartiger Übergang, wie in den **Figuren 1** bis **4** angedeutet, vorhanden sein. Wichtig ist lediglich, dass beim in die Gegenstandswand **3** integrierten Zustand ein möglichst kontinuierlicher Kraftlinienverlauf vom Wandmaterial auf das Zusatzelement **22.3** möglich ist, um eine Langzeitstabiltät zu geben. Es soll auf jeden Fall eine spätere Trennung bzw. Spaltbildung zwischen Zusatzelement **22.3** und Wand **3** (Lochrand) vermieden werden. **Figur 5** zeigt lediglich schematisch die Verbindung der einzelnen Wandschichten zum Zusatzelement **22.3.** Der Lochrand der jeweiligen Schichten wird derart gewählt, dass der oben erwähnte Kraftlinienübergang gegeben ist und sich ein ebener Übergang des Schichtenaufbaus ohne Wulstbildung nach aussen zum Zusatzelement **22.2** ergibt.

**Figur 5** zeigt als beispielsweises Zusatzelement **22.3** eine Eckverstärkung **71,** wie man sie in einer verbesserten Ausführungsform in die "ausgehöhlten" Ecken des in der EP-A 0 914 784 beschriebenen Koffers einsetzen könnte. Die hier gezeigte Eckverstärkung **71** dient nicht nur zur Wandverstärkung; sie weist auch Befestigungselemente (hier ein Durchbruchsgewinde **73)** auf, welche hier zum Anschrauben eines (nicht dargestellten) Zylinderschlosses dienen. Die Eckverstärkung **71** ist hier aus einem Polycarbonat (Thermoplast) hergestellt; es kann aber auch ein mit einem Duroplast getränktes Kohlefasergewebe (Gewichtserspamis) verwendet werden. Eine zur Ausnehmung **22.2** analoge Ausnehmung **74** zeigt **Figur 5.** Die Seitenteile **52** der Wandverstärkung entsprechend der gewünschten kontinuierlichen Kraftlinienübertragung. Die Seitenwände laufen beispielsweise unter einem Winkel von etwa 15° spitz zu. Die "Spitze" **75** geht auf einen Halbkreisbogen mit einem Durchmesser von 0,5 mm zu. Bei dem hier angerissenen "Kofferbeispiel" ist die Wanddicke der Eckverstärkung **71** 3 mm.

Die Zusatzelemente **22.3** in der Gegenstandswand **3** eines Gegenstands **1** müssen nicht alle aus demselben Material bestehen. Das Material wird der speziellen Auf-gabe angepasst. Das Zusatzelement **22.3** kann aus einem thermo- oder duroplastischen oder einem metallischen Material bestehen. Auch können geschichtete sowie Verbundmaterialien verwendet werden. Die Zusatzelemente **22.3** dienen einmal dazu an bestimmten Stellen der Gegenstandswand eine komplizierte Formgebung zu ermöglichen, welche mit dem Positivformteil nicht oder nur aufwendig herzustellen wäre. Auch können Zusatzelemente **22.3** als Wandversteifungen dienen; sie können aber auch Verbund- oder sonstige Einheiten, wie Befestigungselemente, Schloss- Scharnier-, Griff-, Kennzeichnungsteile usw. bilden.

Sind alle Schichten mit den Zusatzelementen **22.3,** sofern diese benötigt werden, aufgelegt und "evakuiert" worden, wird der Positivformteil um 180° gedreht und in den Negativformteil **7b** gelegt. Positiv- und Negativformteil **7a** und **7b** sind zwar aufgrund der in der Dichtnut **31** liegenden umlaufenden Dichtlippe **20** vakuumdicht miteinander verbunden; der Zwischenraum zwischen den beiden Formteilen **7a** und **7b** ist jedoch über die umlaufende Nut **17** und den in diese einmündenden Durchbruch **19** fluidmäßig zugänglich. Der Negativformteil **7b** liegt auf der Unterplatte **24** einer Presse auf. Die Druckplatte **21** der Presse liegt auf dem Abstellflansch **15** des Positivformteils **7a** über eine umlaufende Dichtlippe **55** abgedichtet dicht auf. Die Dichtlippe **55** ist hier an der Druckplatte **21** angeordnet, sie kann aber auch auf dem Abstellflansch **15** angeordnet sein. Die Druckplatte **21** hat einen Justageabsatz **57,** der eine räumliche Zuordnung von Druckplatte **21** und Positivformteil **7a** ergibt. Auf die Druckplatte **21** wirkt die Oberplatte **23** der Presse.

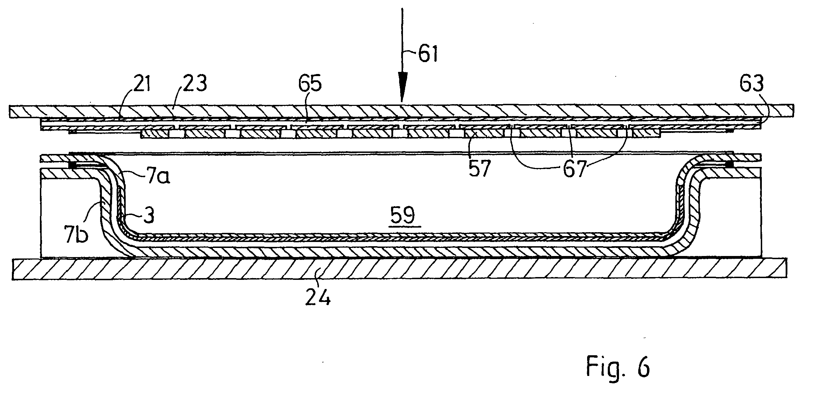

**Figur 6** zeigt den Positivformteil **7a** eingelegt in den Negativformteil **7b.** Der Negativformteil **7b** liegt auf der Druckplatte **21.** Die Oberplatte **23** zusammen mit der Druckplatte **21** werden in Pressdruckrichtung **61** auf die Unterseite des Positivformteils **7b** deren Freiraum **59** abdichtend zubewegt. Die Druckplatte **21** hat ein System zur Druckbeaufschlagung des Freiraums **59.** Das Druckbeaufschlagungssystem hat einen Anschluß **63** für ein Druckfluid sowie daran angeschlossene Fluidleitungen **65** mit mehreren Fluidauslässen **67.** Das in den Freiraum **59** einbringbare Fluid ist heizbar und kann mit Druck beaufschlagt werden.

Der Innenraum **25** der Negativform 7b ist mit einem heizbaren Fluid beaufschlagbar. Die Temperatur und der Fluss des Heizfluids sowie des heizbaren Druckfluids sind derart gewählt, dass Positiv- und Negativformteil **7a** und **7b** mit dem Schichtenaufbau in etwa fünfzehn Minuten auf 60°C bis 120°C bevorzugt auf etwa 85°C annähernd kontinuierlichen aufgeheizt werden, anschliessend wird die erreichte Temperatur etwa fünfzehn Minuten konstant gehalten und dann wieder durch Einleiten eines Kühlfluids oder gekühlten Fluids auf Raumtemperatur abgekühlt. Zum Temperaturverlauf parallel verlaufend, erfolgt eine Druckbeaufschlagung mit einer kontinulierlichen Rampe auf 2 bis 6 bar, bevorzugt auf etwa 3 bar mit einem fünfzehnminütigen Platteau und einem anschließenden Druckabbau. Die verwendeten Drücke und Temperaturen bzw. deren Verläufe richten sich nach den im Schichtenaufbau verwendeten Materialien.

Zum Druckaufbau wird der Innenraum **59** durch nicht dargestellte Einlassöffnungen mit einem Druckfluid beaufschlagt. Da die Positivform elastische Bereiche aufweist, ist ein guter Druckübergang auf das Schichtmaterial gegeben.

Nach dem Druckabbau und Erreichen der Umgebungstemperatur werden Oberund Unterplatte **23** und **24** auseinander gefahren sowie der Positivformteil **7a** mit dem aufliegenden, nun ausgehärteten Gegenstandswand **3** aus dem Negativformteil **7b** herausgenommen. Anschließend wird der Positivformteil **7a** vom Gegenstand **1** unter elastischem Verformen abgezogen.

Anstatt nach dem Auflegen jeweils einer Schicht den Wandaufbau zu evakuieren, kann auch erst nach Auflage der letzten, obersten Schicht vor der Temperaturund Druckbeaufschlagung der gesamte Schichtenaufbau evakuiert werden. Einen besonders guten blasen- und faltenfreieren Aufbau erhält man jedoch mit einem Evakuieren bei jeder aufgebrachten Schicht.

Die Schichtmaterialien müssen nicht einstückig sein. Es können auch mehrere Stücke pro Schicht verwendet werden. Es kann dann jedoch vorkommen, dass sich kleine Unebenheiten in der Oberfläche nach dem Aushärten ergeben können. Dies kann jedoch durch die richtige Auswahl des bzw. der Tränkungsmittel reduziert bzw. unterbunden werden. Das Tränkungsmittel kann nämlich derart gewählt werden, dass es in den Spalt zwischen den Materialien gleicher Schicht hineinläuft bzw. -kriecht und diesen ausreichend ausfüllt. Es können pro Schicht auch unterschiedliche Matrialien bzw. Gewebe verwendet werden, um beispielsweise auf diese Art bereits versteifte oder bevorzugt elastische Bereiche zu erzeugen. Auch kann hierdurch, sofem die herzustellende Gegenstandswand nicht zu kleine Radien haben soll, auf eine Vorprägung verzichtet werden.

Anstelle die Schichten auf den Positivformteil zu legen, können sie auch in den Negativformteil eingelegt werden. Vorzugsweise wird man dann jedoch den Negativformteil derart ausbilden, dass er wie der ursprüngliche Positivformteil von der ausgehärteten Gegenstandswand abgezogenen werden kann; d. h. man wird ihn wenigstens teilweise elastisch ausbilden. Den neuen Positivformteil wird man dann mit einem Wandinnenraum kühl- und erwärmbar sowie seine Oberfläche hochpoliert für eine gute Oberflächenqualität der herzustellenden Wand ausbilden. Den Anstehabsatz für die Bildung des Gegenstandsrandes wird man dann vorzugsweise auch in der Negativform ausbilden. Einen derartigen Aufbau wird man vorzugsweise dann wählen, wenn schalenartige Gegenstände mit einer konkaven Oberfläche hoher Güte gewünscht werden.

Anstatt die Positionierhilfe als Ausnehmung **22.2** auszubilden, kann sie auch als erhaltener An- bzw. Aufsatz ausgebildet sein. Das betreffende Zusatzelement wird dann einfach aufgesteckt.

Der Negativformteil **7b** kann anstatt aus Galvanonickel auch aus Kohlefaser mit einem ausgehärteten Tränkmittel bestehen. Es kann als Formmaterial auch Aluminium verwendet werden; Stahl ginge zwar auch, ist aber zu teuer. Die Oberflächengüte der Negativform **7b** kann man nun derart wählen, dass hoch polierte Oberflächen nach dem Ausformen entstehen. Man kann aber auch lediglich eine glatte oder auch strukturierte Oberfläche erzeugen.

## Patentansprüche

1. Verfahren zur Herstellung eines profilierten Gegenstands **(1)**, insbesondere eines Behälterteils, mit einer schalenartigen Gegenstandswand **(3)**, wobei das Wandmaterial wenigstens ein mit wenigstens einem aushärtbaren Tränkmaterial getränktes, gewebeartiges Schichtmaterial hat, **dadurch gekennzeichnet, dass** zur Formgebung ein Positiv- und ein Negativformteil **(7a, 7b)** verwendet werden, zwischen die das Wandmaterial eingebracht wird; auf beide Formteile **(7a, 7b)** ein Druckverlauf aufgebracht und zum Aushärten wenigstens einer der Formteile **(7b)** mit einem Temperaturverlauf beaufschlagt und zum Entnehmen der wenigstens teilweise ausgehärteten Gegenstandswand **(3)** wenigstens einer der Formteile **(7a)** unter bereichsweiser elastischen Verformung abgezogen wird.

2. Verfahren nach Anspruch 1, **dadurch gekennzeichnet, dass** für die Gegenstandswand **(3)** mehrere übereinander zu legende Schichtmaterialien **(37, 43, 45, 47, 49)** verwendet werden und insbesondere wenigstens eines der Schichtmaterialien **(47)** thermoplastische und wenigstens ein anderes Schichtmaterial **(37, 43, 45, 49)** duroplastische Eigenschaften nach dem Aushärtevorgang hat, wenigstens einer der Formteile **(7a)** wenigstens einen, eine freie Randkante des Gegenstands **(1)** definierenden, umlaufenden Anstehabsatz **(13)** hat, jedes Schichtmaterial **(37, 43, 45, 47, 49),** welches diesen freien Kantenbereich hineinreichen soll, in seinen Abmessungen konvektioniert und vorzugsweise vorgeformt wird und auf bzw. in einen der Formteile **(7a)** derart gelegt wird, dass seine Ränder am Anstehabsatz **(13)** anstehen, um später auf eine Kantennachbearbeitung des Gegenstands **(1)** verzichten zu können.

3. Verfahren nach Anspruch 1 oder 2, **dadurch gekennzeichnet, dass** wenigstens einer der Formteile **(7a)** für in der Gegenstandswand **(3)** zu integrierende Zusatzelemente **(22.3; 71)** eine Positionierhilfe **(22.2; 74)** sowie jedes Schichtmaterial **(37, 43, 45, 47, 49)** jeweils eine dem Umriss jedes Zusatzelements **(22.3; 71)** entsprechende Ausnehmung **(40.1 - 40.5)** hat, wobei jedes Schichtmaterial **(37, 45)** mit dem wenigstens einen aushärtbaren Material in bzw. auf diesen Formteil **(7a)** sowie anschliessend jedes Zusatztelement **(22.3; 71)** in bzw. auf die betreffende Justierhilfe **(22.2; 74)** gelegt und dann der andere Formteil **(7b)** mit diesem Formteil **(7b)** zusammengebracht wird.

4. Verfahren nach einem der Ansprüche 1 bis 3, insbesondere nach Anspruch 3, **dadurch gekennzeichnet, dass** auf den Positivformteil **(7a)** ein Glasgewebe **(37),** getränkt mit einem Duroplast bildenden ersten Tränkmittel aufgelegt wird, anschließend als Gegenstandswandkernwerkstoff eine Schaummatte **(43),** dann ein Kohlefasergewebe **(45),** getränkt mit einem Duroplast bildenden zweiten Tränkmittel, in einem folgenden Verfahrensschritt eine Thermoplastfolie **(47)** aufgelegt und vorzugsweise als letzte Schicht ein Vlies **(49),** getränkt mit einem Duroplast bildenden dritten Tränkmittel aufgelegt wird, damit eine Oberflächenlackierung aufbringbar ist, und insbesondere erst nach der letzten Schicht **(47** oder **49)** die vorgefertigten Zusatzelemente **(22.3)** positioniert werden.

5. Verfahren nach einem der Ansprüche 1 bis 4, **dadurch gekennzeichnet, dass** nach dem Ein- bzw. Auflegen vorzugsweise jeder Schicht **(37, 43, 45, 47, 49)** auf bzw. in einen der Formteile **(7a)** dieser vakuumdicht abgedeckt und eine Evakuierung der Schicht bzw. Schichten **(37, 43, 45, 47, 49)** bei einem Unterdruck kleiner 0,8 bar vorzugsweise unter 0,1 bar erfolgt, um einen blasen- und/oder faltenfreien Zustand des Schichtmaterials bzw. des Laminats mit mehreren Schichtmaterialien zu erreichen.

6. Form **(5)** mit einem Positiv- und einem Negativformteil **(7a, 7b)** zur Herstellung eines profilierten, schaltenartigen Gegenstands **(1)** mit wenigstens einem Schichtmaterial **(37, 43, 45, 47, 49)** nach dem Verfahren gemäß einem der Ansprüche 1 bis 5, **dadurch gekennzeichnet, dass** die Formteile **(7a, 7b)** unter Einlagerung des Schichtmaterials **(37, 43, 45, 47, 49)** vorzugsweise mit einer Spielpassung zusammenbringbar sind, und wenigstens einer der Formteile **(7a, 7b)** mit einem Temperaturverlauf und vorzugsweise einer der beiden Formteile **(7a, b)**, insbesondere der andere Formteil **(7a)** bereichsweise elastisch verformbar ausgebildet ist, um vom ausgehärteten Gegenstand (1) abziehbar zu sein, und insbesondere auf seiner Formrückseite **(59, 69)** mit einem Druckverlauf beaufschlagbar ist.

7. Form **(5)** nach Anspruch 6, **dadurch gekennzeichnet, dass** einer der Formteile **(7a, 7b),** insbesondere der Positivformteil **(7a),** einen umlaufenden Anstehabsatz **(13)** hat, der einen Abschluss für jedes einzulegende Schichtmaterial **(37, 43, 45, 47, 49)** bildet, damit nach einem Ausformen eine Bearbeitung der Randkante des Gegenstands **(1)** nicht erforderlich ist.

8. Form **(5)** nach Anspruch 6 oder 7, **dadurch gekennzeichnet, dass** einer der Formteile **(7a, 7b),** insbesondere der Positivformteil **(7a),** wenigstens eine Positionierhilfe **(22.2; 74)** mit vorzugsweise einer umlaufenden Randdickenverjüngung, insbesondere mit einer Abstufung, hat, in bzw. auf die in die Gegenstandswand **(3)** integrierbare, vorgefertigte Zusatzelemente **(22.3; 71),** welche insbesondere eine Randverjüngung aufweisen, derart einlegbar sind, dass eine integrierende Verbindung mit dem Schichtmaterial **(37, 43, 45, 47, 49)** insbesondere einer guten Kraftlinienübertragung durch die Randverjüngung zusammen mit der Abstufung erfolgt.

9. Form **(5)** nach einem der Ansprüche 6 bis 8, **dadurch gekennzeichnet, dass** einer der Formteile **(7a, 7b),** insbesondere der Negativteil **(7b)** doppelwandig mit einem Wandinnenraum **(25)** ausgebildet ist, in den ein Fluid zur Formteilerwärmung und/oder -kühlung einbringbar ist, und vorzugsweise das Material des Formteils **(7b)** den thermischen Ausdehnungseigenschaften des Gegenstandmaterials angepasst ist, vor allem aus Galvanonickel besteht und eine ausreichende Oberflächengüte hat, mit der dann eine ausreichende Oberflächengüte der Gegenstandswand **(3)** erzeugbar ist.

10. Form nach einem der Ansprüche 6 bis 9, **dadurch gekennzeichnet, dass** auf der profilbestimmenden Oberfläche eines der Formteile, insbesondere des Positivformteils **(7a)** eine Selbsttrennfolie **(35)** aufgebracht, vorzugsweise aufvulkanisiert ist und vorzugsweise einer der Formteile **(7a, 7b),** insbesondere der Positivformteil **(7a),** örtlich unterschiedliche Steifigkeit und Elastizität aufweist, wobei vorzugsweise gerade Formteilbereiche **(9a - 9c)** steif insbesondere durch Einlagematerial **((10)** in ein elastisches Grundmaterial **(8)** und Eckenbereiche **(11a, 11b)** elastisch verformbar, infolge vorzugsweise aus nicht bewehrten elastischen Grundmaterial **(8)** ausgebildet sind sowie bei einer besonderen Ausführungsform eine Druckplatte **(21)** vorhanden ist, welche auf die den Gegenstand **(1)** nicht tragende Rückseite **(60)** des Positivformteils **(7a)** dicht auflegbar ist und in einem Freiraum **(59)** zwischen Druckplatte **(21)** und dieser Rückseite ein Druckbeaufschlagungsfluid zur Druckbeaufschlagung des Gegenstandswandmaterials einleitbar ist.

11. In eine Gegenstandswand **(3)** integrierbares Zusatzelement **(22.3)** verwendbar bei der Herstellung eines profilierten, schalenartigen Gegenstands **(1)** mit wenigstens einem Schichtmaterial **(37, 43, 45, 47, 49)** nach dem Verfahren nach Anspruch 3, ausgebildet nach Anspruch 8, **dadurch gekennzeichnet, dass** das Zusatzelement **(22.3; 71)** im Wesentlichen aus einem thermoplastischen, duroplastischen und/oder metallischen Material besteht und im Speziellen eine, insbesonders stufenartig, umlaufende Randverjüngung aufweist, welche bei im Schichtmaterial **(37, 43, 45, 47, 49)** des Gegenstands **(1)** integrierten Zusatzelement **(22.3; 71)** einen möglichst kontinuierlichen Kraftlinienverlauf zwischen Zusatzselement **(22.3; 71)** und Gegenstandswand **(3)** von auf dem Gegenstand **(1)** wirkenden Verformungskräften zum Erhalt einer dauerhaften Verbindung ermöglicht.

12. Gegenstand **(1)** hergestellt nach dem Verfahren gemäß einem der Ansprüche 1 bis 5 mit einer Formteile **(7a, 7b)** aufweisenden Form **(5)** nach einem der Ansprüche 6 bis 10 vorzugsweise mit wenigstens einem Zusatzelement **(22.3)** nach Anspruch 11, **gekennzeichnet durch** eine Kombination von wenigstens jeweils einem thermo- und wenigstens einem duroplastischen Schichtmaterial **(37, 43, 45, 47, 49),** wobei vorzugsweise ein inneres Glasgewebe **(37),** durchdrungen mit einem Duroplast, bedeckt ist von einer, vorzugsweise geschlossenporigen, Schaummatte **(43),** auf der wiederum ein Kohlefasergewebe **(45),** durchdrungen mit einem Duroplast, liegt, welches von einer thermoplastischen Folie **(47)** bedeckt ist.

13. Gegenstand nach Anspruch 12, **gekennzeichnet durch** eine Vliesaussenschicht **(49)** getränkt mit einem Duroplast, um eine Lackierbarkeit des Gegenstands **(1)** zu ermöglichen.
